(19) Europäisches Patentamt / European Patent Office / Office européen des brevets

(11) **EP 3 201 244 B1**

(12) **EUROPEAN PATENT SPECIFICATION**

(45) Date of publication and mention
of the grant of the patent:
**10.04.2019 Bulletin 2019/15**

(51) Int Cl.:
*C08F 110/02* (2006.01)    *C08F 4/28* (2006.01)
*B32B 27/32* (2006.01)    *B05D 1/26* (2006.01)
*B32B 27/10* (2006.01)    *B32B 27/30* (2006.01)
*C08F 210/02* (2006.01)    *C09D 123/08* (2006.01)

(21) Application number: **15763289.4**

(22) Date of filing: **09.09.2015**

(86) International application number:
**PCT/EP2015/070530**

(87) International publication number:
**WO 2016/050462 (07.04.2016 Gazette 2016/14)**

(54) **LOW DENSITY POLYETHYLENE WITH HIGH ELONGATION HARDENING**

POLYETHYLEN MIT NIEDRIGER DICHTE MIT HOHER DEHNUNGSHÄRTUNG

POLYÉTHYLÈNE BASSE DENSITÉ À DURCISSEMENT À ALLONGEMENT ÉLEVÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2014 EP 14187337**

(43) Date of publication of application:
**09.08.2017 Bulletin 2017/32**

(73) Proprietor: **Basell Polyolefine GmbH
50389 Wesseling (DE)**

(72) Inventors:
• **WEIAND, Sebastian
50259 Pulheim (DE)**
• **GONIOUKH, Andrei
50374 Erftstadt (DE)**
• **SCHMITZ, Stephan
50999 Köln (DE)**
• **FINETTE, Andre-Armand
50997 Köln (DE)**
• **BÜRGER, Guido
50321 Brühl (DE)**
• **KÜPPER, Guido
53894 Mechernich (DE)**

• **HERRMANN, Thomas
51103 Köln (DE)**
• **VITTORIAS, Iakovos
55129 Mainz (DE)**
• **LILGE, Dieter
67117 Limburgerhof (DE)**
• **MANNEBACH, Gerd
56294 Münstermaifeld (DE)**

(74) Representative: **Gaverini, Gaetano Luigi Attilio
Basell Poliolefine Italia S.r.l.
Intellectual Property
P.le Donegani, 12
44122 Ferrara (IT)**

(56) References cited:
**GB-A- 934 444      US-A- 2 153 553**

• **FLORIAN J STADLER ET AL: "Influence of molar
mass distribution and long-chain branching on
strain hardening of low density polyethylene",
RHEOLOGICA ACTA, SPRINGER-VERLAG, DE,
vol. 48, no. 5, 10 December 2008 (2008-12-10),
pages 479-490, XP019712991, ISSN: 1435-1528**

## Description

FIELD OF THE INVENTION

The present disclosure provides a low density polyethylene having high values of elongational hardening and to its uses in applications where the high values of elongational hardening of the polymer melt is of high importance, like in extrusion coating and foaming.

BACKGROUND OF THE INVENTION

Low density polyethylene (LDPE) with a significant concentration of long chain branching is generally obtained by high pressure polymerization in the presence of radical initiating agents.

There are two basic high pressure polymerization processes for the manufacture of LDPE: autoclave and tubular.

The LDPE made by the autoclave reactor process ("autoclave LDPE") has a high concentration of long chain branches, resulting into high values of elongational hardening, and a relatively broad molecular weight distribution that make it easy to process.

The autoclave polymerization is generally carried out in the presence of radical initiating agents selected from organic peroxides.

On the other hand, the tubular reactor process does not necessarily require the use of organic peroxides. It can be carried out by using oxygen alone as the radical initiating agent, thus allowing to prepare a LDPE which is free from the products of chemical degradation of organic peroxides.

Therefore the organoleptic properties of the so obtained LDPE are improved.

In fact it is known that the organoleptic properties (in particular odor) of LDPE are significantly worsened in the presence of the said products of degradation of organic peroxides.

However the LDPE made by the tubular reactor process ("tubular LDPE") has a lower concentration of long chain branches, resulting into a lower elongational hardening, and narrower molecular weight distribution than the autoclave LDPE, so that it is not suited for applications requiring high processability, such as extrusion coating.

It would be therefore highly desirable to obtain a LDPE product having high elongational hardening and broad molecular weight distribution, but without using peroxides in order to maintain good organoleptic properties.

It would also be desirable to maintain the density of the LDPE product the lowest possible.

In fact, the lower the density, the lower is the polymer melting temperature and melting enthalpy which consequently directly results in energy savings for the downstream processing of the polymer.

SUMMARY OF THE INVENTION

The present disclosure provides a low density polyethylene (LDPE) having the following features:

1) a density from 0.910 to 0.924 $g/cm^3$, preferably from 0.910 to 0.921 $g/cm^3$, determined according to ISO 1183 at 23°C;
2) elongational hardening at 150°C at an elongational rate of 1 $s^{-1}$ equal to or higher than 4.2, preferably equal to or higher than 4.5;
3) a ratio Mw/Mn equal to or higher than 18 where Mw is the weight average molar mass, measured by the MALLS detector coupled to the GPC and Mn is the number average molar mass, measured by GPC (Gel Permeation Chromatography);
4) Mw values from 230,000 to 400,000 g/mol., or from 250,000 to 400,000 g/mol., where Mw is measured as previously said.

The LDPE is obtainable in a polymerization process carried out in the presence of oxygen as the only radical initiating agent and in the absence of solvents..

DETAILED DESCRIPTION OF THE INVENTION

It has been found that a LDPE product can be obtained by using oxygen as the only radical initiating agent, in the absence of solvents, in particular organic solvents, such as saturated hydrocarbons, like isododecane, by properly selecting the polymerization conditions.

Such polymerization conditions allow to prepare the inventive LDPE in a tubular reactor.

Thus the LDPE of the invention can be obtained in a particularly pure form, due to the absence of organic peroxides and of the solvents generally used as carrier of said peroxides.

The content of solvents and of products of chemical degradation of organic peroxides can be revealed by using the headspace gas chromatography.

Headspace gas chromatography is a well known analytical technique commonly used to detect volatile components in various materials, including polymerization products.

A particularly efficient headspace gas chromatography is the dynamic one, where the volatile components are extracted (stripped) from the samples by means of a gas flow at high temperature (generally from 250 to 320 °C) and sent to analysis, which is generally carried out by using a Mass Spectrometer.

The extraction step is generally called "thermal desorption" (TDS).

A particularly suited gas used for TDS is He.

The LDPE of the invention includes ethylene homopolymers, copolymers and mixtures thereof.

Examples of LDPE copolymers include ethylene-vinyl acetate copolymers, ethylene-vinyl alcohol copolymers, ethylene-acrylate copolymers, ethylene-methacrylate coplymers, ethylene-α-olefin copolymers and mixtures thereof.

Suitable α-olefin comonomers for making the LDPE copolymers include $C_3$-$C_{10}$ α-olefins, such as propylene, 1-butene, 1-hexene, 1-octene and mixtures thereof.

In general, the term "copolymer" is meant to include also polymers containing more than one kind of comonomers, such as terpolymers.

Specific and preferred Mw/Mn ranges for the LDPE of the invention are from 18 to 30 or from 18 to 25.

Specific and preferred ranges of elongational hardening at 150°C at an elongational rate of 1 s$^{-1}$ for the LDPE of the invention are from 4.2 to 10 or from 4.5 to 10.

The inventive LDPE has an increased long chain branching concentration with respect to conventional tubular LDPE. The long chain branching can be measured by a gel permeation chromatography branching index, gpcBR. The gpcBR is calculated from the bulk light scattering (LS) weight average molecular weight, bulk intrinsic viscosity, and their linear equivalents from conventional GPC calculations. The value of gpcBR is given by:

$$gpcBR = \left(\frac{M_{w,b}}{M_{W,L}}\right)^{\alpha} x \left(\frac{[\eta]_L}{[\eta]_b}\right) - 1$$

where $M_{w,b}$ is the bulk weight average molecular weight, as quantified by the Multi-angle-laser-light-scattering (MALLS), $M_{w,L}$ is the weight average molecular weight calculated from the concentration detector for a GPC curve assuming a linear polymer structure, $[\eta]_b$ is the bulk intrinsic viscosity measured in this case by a capillary viscometer (LAUDA), $[\eta]_L$ is the intrinsic viscosity calculated from the concentration detector GPC curve assuming a linear polymer structure using the Mark-Houwink constants, K and α, for linear polyethylene, and α is a Mark-Houwink constant for linear polyethylene. For more details about theoretical aspects of gpcBR index, see C. Enos, K. Rufener, J. Merrick-Mack, and W. Yau, Waters International GPC Symposium Proceedings, June 6-12, 2003, Baltimore, MD.

Preferably, the LDPE of the invention has a gpcBR value equal to or higher than 1.5, preferably equal to or higher than 1.7, in particular from 1.5 to 4 or from 1.7 to 4.

Moreover the LDPE of the invention has preferably at least one of the following additional features:

- a melt flow rate (MFR) according to ISO 1133 (190°C, 2.16 kg) from 1.5 to 15 g/10 min.;-
- elongational hardening values at 150°C at an elongational rate of 5 s$^{-1}$ equal to or higher than 4.5, in particular from 4.5 to 8.

As previously mentioned, the LDPE of the invention can be obtained in a high pressure polymerization process, preferably in a tubular reactor, using oxygen as the only radical initiating agent and in the absence of solvents.

Methods for making high pressure LDPE are known. For instance, US patent. No. 3,691,145 and US patent application No. 2010/0076160, the teachings of which are incorporated herein by reference, teach producing LDPE in a tubular reactor process.

For one embodiment, a gas mixture (hereinafter called "polymerization gas") of ethylene, oxygen, generally fed in form of air, and optional comonomers is injected into a high pressure tubular reactor.

The said polymerization gas can optionally comprise one or more chain transfer agents known in the art, such as propylene, propane and propionic aldehyde.

Such chain transfer agents are used to regulate the molecular weights.

The tubular reactor preferably has several zones where the polymerization gas is added.

The preferred pressure of the polymerization gas fed to the reactor is from 1400 to less than 1900 bar, in particular from 1400 to 1840 bar.

Preferred polymerization temperatures are from 150 to 320°C.

Thus the present disclosure also relates to a high pressure polymerization process for preparing LDPE, carried out in the above said conditions.

As previously mentioned, the LDPE of the invention is particularly suited for use in extrusion coating and in other applications where the high values of elongational hardening of the polymer melt is of high importance, for example foamed polyethylene.

In the extrusion coating process, a thin molten polymer film coating is deposited with known extrusion techniques on a substrate, like paper for example.

The high elongational hardening values, together with the broad molecular weight distribution of the LDPE of the invention, allow to run the extrusion coating process at high speed with consistent quality.

Thus the present invention provides also extrusion coated articles comprising the LDPE of the invention in at least one coating layer.

EXAMPLES

The practice and advantages of the various embodiments, compositions and methods as provided herein are disclosed below in the following examples. These Examples are illustrative only, and are not intended to limit the scope of the invention in any manner whatsoever.

The following analytical methods are used to characterize the polymer compositions.

Density

Determined according to ISO 1183 at 23°C.

Elongational hardening

Elongational hardening is the increase of melt viscosity measured under uniaxial elongation with constant elongational rate as compared to the steady-state viscosity value, $\eta_{E,max}$ / $\eta_s$. The higher this ratio at fast elongational rates in a rheometric experiment is (typically at elong. rates of $1s^{-1}$ and $5s^{-1}$) the more stable is the molten polymer during processing, where high elongations and drawdown ratios are involved, e.g. in extrusion coating.

The determination of elongational hardening (also called strain hardening) was carried out during uniaxial elongation, at a constant elongational rate and at T = 150°C.

The measurements were performed on a rotational rheometer instrument Physica MCR 301 from AntonPaar, equipped with the Sentmanant Elongational Rheology tool (SER). The measurements were performed at 150 °C, after an annealing time of 5 min at the measurement temperature. The measurements were repeated for different specimens of each sample at elongational rates varying between 0.01 $s^{-1}$ and 10 $s^{-1}$, typically at 0.01, 0.05, 0.1, 0.5, 1, 5, 10 $s^{-1}$. For each measurement, the uniaxial elongational melt viscosity was recorded as a function of time.

The test specimens were prepared for the measurement as follows: 2.2 g of the material were weighted and used to fill a moulding plate of 70x40xlmm. The plate was placed in a press and heated up to 200°C, for 1 min, under a pressure of 25 bar. After the temperature of 200°C was reached, the sample was pressed at 100 bar for 4 min. After the end of the compression-time, the material was cooled to room temperature and plates were removed from the form. From the 1mm thick compressed polymer plate, rectangular films of 12x11 mm were cut off and measured.

Elongational hardening in uniaxial elongation is the ratio of the maximum melt elongational viscosity measured at the specific elongation rate, $\eta_{E,max}$, over the linear response at the same time, $\eta_s$ . The $\eta_{E,max}$, in case no plateau is observed after a certain elongation, can be defined as the maximum polymer melt viscosity value, under uniaxial elongation with the specific elongational rate at the temperature of 150° C, measured at a time t = 3x1/(elongatinoal-rate) after the start of deformation or at elongations L(t)/L(0) $\geq$ 3 (e.g. for elongational rates of 1 1/s after t = 3 sec and for elongational rates of 5 1/s after t = 0.6 sec).

The linear viscoelastic response, $\eta s$, is calculated from fitting linear rheological data of G' and G" at the same temperature with a multi-mode Maxwell model, calculating the transient shear viscosity and multiplying by 3 (Trouton ratio). Due to the fact that the measurement is not an ideal uniaxial elongation, the Trouton ratio may be between 3 and 4 with the target being to fit the steady-state elongational viscosity curve at all measured elongational rates.

The method is described in Mackosko C.W. Rheology Principles, Measurements and Applications, 1994, Wiley-VCH, New York. As known in the art, there is a direct correlation between strain hardening at uniaxial elongation and long-chain branching in PE.

Dynamic Head-space gas chromatography (GC)

Samples were thermodesorbed by thermal desorption (TDS) using a standard GERSTEL Thermal Desorption Unit TDU at 280°C for 15 minutes to characterize oligomers, additives and their by-products, together with volatile components in general and in particular isododecane. Stripped organics were separated by capillary GC (HP5-MSUI-Agilent) and identified by using Mass Spectrometer (quadrupole). TDS desorption occurs into Oxygen-free atmosphere. Only ultra high purity He (same as carrier for GC-MS) is used. At 280°C, no degradation occurs in matrix and in additives. Results obtained in TIC mode (Total Ion Current).

GpcBR and Molecular Weight Distribution Determination

The gpcBR is measured by a gel-permation chromatography coupled with a multi-angle-laser-light-scattering detector, GPC-MALLS. The bulk intrinsic viscosity, $\eta_b$, is determined in a capillary viscometer (PVS2, LAUDA) in decalin at 135 °C, in accordance to the DIN EN ISO 1628-3:2010-10. The determination of the molar mass distributions and the means Mn, Mw and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used. The solvent was vacuum destilled under Nitrogen and was stabilized with 0.025% by weight of 2,6-di-tert-butyl-4-methylphenol. The flowrate used was 0.6 ml/min, the injection was 500$\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane. The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively. The radius of gyration for each fraction eluted from the GPC (as described above but with a flow-rate of 0.6 ml/min and a column packed with 30μm particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software.

Melt Flow Rate

Measured according to ISO 1133 at 190°C with a load of 2.16 kg.

Example 1

A hyper compressor consisting of two compression strands (an A- and a B-side) is fed with a mixture of ethylene, propylene, propionic aldehyde and air. Per ton of compressed ethylene, 2.2 kg of propylene, 0.05 kg of propionic aldehyde and 0.13 kg of air are added to the ethylene entering the A-side. The A-side mixture is compressed to a pressure within the range of 1600 to 1800 bar. The compressed mixture is then heated to 180±5°C and enters at the beginning of a tubular reactor. During the polymerization the temperature in the reactor rises. Pressurized hot water of 150 to 200°C is circulated through the jackets surrounding the reactor tubes to keep the maximum reaction temperature below 320°C.

The B-side of the hyper compressor is fed with 2.2 kg of propylene and 0.23 kg of air per ton of ethylene entering the B-side. The ethylene mass flow entering the B-side is half the ethylene mass flow entering the A-side. The ethylene/propylene/air mixture from the B-side which is compressed to a pressure within the range of 1500 to 1700 bar enters the tubular reactor at half length of the reactor with a temperature of 80±5°C. Pressurized hot water of 150 to 200°C is circulated through the jackets surrounding the reactor tubes to keep the maximum reaction temperature below 320°C. The polymer is discharged and degassed. The molten polymer enters an extruder to form the LDPE pellets. The tubular LDPE has a density of 0.916 g/cm$^3$, a melt flow rate of 4.6 g/10 min (2.16 kg, 190°C), a weight average molecular mass Mw(MALLS) of 264000 g/mol, a Mw(MALLS)/Mn value of 23, elongational hardening at 150°C of 5.7 at an elongational rate of 1 s$^{-1}$ and 5.8 at 5 s$^{-1}$ and gpcBR (determined with $\alpha$ = 0.70) of 2.15.

Due to the high values of elongational hardening, the so obtained low density polyethylene is suitable for extrusion coating applications or other applications where the high values of elongational hardening of the polymer melt is of high importance, for example foamed polyethylene.

The organoleptic properties are very good, due to the absence of products of chemical degradation of organic peroxides.

In particular, head-space GC does not show any signal of isododecane, tert-butyl alcohol and acetone.

Comparative Example 1

A hyper compressor consisting of two compression strands (an A- and a B-side) is fed with a mixture of ethylene, propionic aldehyde and air. Per ton of compressed ethylene, 0.75 kg of propionic aldehyde and 0.06 kg of air are added to the ethylene entering the A-side. The A-side mixture is compressed to a pressure within the range of 2100 to 2300 bar. The compressed mixture is heated to 175±5°C and enters at the beginning of a tubular reactor. During the polymerization the temperature in the reactor rises. Pressurized hot water of 150 to 200°C is circulated through the jackets surrounding the reactor tubes to keep the maximum reaction temperature below 320°C.

The B-side of the hyper compressor is fed with 0.3 kg of propionic aldehyde and 0.11 kg of air per ton of ethylene entering the B-side. The ethylene mass flow entering the B-side is half the ethylene mass flow entering the A-side. The ethylene/propionic aldehyde/air mixture from the B-side, which is compressed to a pressure within the range of 1900 to 2200 bar, enters the tubular reactor with a temperature of 60±5°C. Pressurized hot water of 150 to 200°C is circulated through the jackets surrounding the reactor tubes to keep the maximum reaction temperature below 320°C. The polymer is discharged and degassed. The molten polymer enters an extruder to form the LDPE pellets. The tubular LDPE has a density of 0.923 g/cm$^3$, a melt flow rate of 4.2 g/10 min (2.16 kg, 190°C), a weight average molecular mass Mw(MALLS) of 131,000 g/mol, a Mw(MALLS)/Mn value of 6.8 and elongational hardening at 150°C of 3.6 at an elongational rate of 1 s$^{-1}$ and 4.0 at 5 s$^{-1}$ and gpcBR (determined with $\alpha$ = 0.70) of 0.88.

Due to the low values of elongational hardening, the so obtained low density polyethylene is not suitable for extrusion coating applications or other applications where the high values of elongational hardening of the polymer melt is of high importance, for example foamed polyethylene.

The organoleptic properties are very good, due to the absence of products of chemical degradation of organic peroxides.

Comparative Example 2

A hyper compressor is fed with a mixture of ethylene and propane. Per ton of compressed ethylene 2.4 kg of propane is added to the ethylene entering the compressor. The mixture is compressed to a pressure within the range of 1600 to 1800 bar. The compressed mixture is cooled to 27°C and fed to a stirred autoclave reactor. A mixture of TBPEH (tert-butyl peroxy-2-ethylhexanoate) and TBPA (tert-butyl peroxyacetate) dissolved in isododecane is prepared, wherein 28% of the weight of the mixture is comprised of TBPEH, 36% of the weight of the mixture is comprised of TBPA and 36% of the weight of the mixture is comprised of isododecane. The mixture is fed to the reactor such that the average reactor temperature is 240°C. The polymer is discharged and degassed. The molten polymer enters an extruder to form the LDPE pellets. The autoclave LDPE has a density of 0.926 g/cm$^3$, a melt flow rate of 5.7 g/10 min (2.16 kg, 190°C), a weight average molecular mass Mw(MALLS) of 367,000 g/mol, a Mw(MALLS)/Mn value of 21 and elongational hardening at 150°C of 6.7 at an elongational rate of 1 s$^{-1}$ and 6.3 at 5 s$^{-1}$ and gpcBR (determined with $\alpha$ = 0.70) of 2.30.
Head-space GC does show the signal of isododecane.

**Claims**

1. A low density polyethylene having the following features:

   1) a density from 0.910 to 0.924 g/cm$^3$, determined according to ISO 1183 at 23°C;
   2) elongational hardening at 150°C at an elongational rate of 1 s$^{-1}$ equal to or higher than 4.2, preferably equal to or higher than 4.5;
   3) a ratio Mw/Mn equal to or higher than 18, where Mw is the weight average molar mass, measured by the MALLS detector coupled to the GPC and Mn is the number average molar mass, measured by GPC (Gel Permeation Chromatography);
   4) Mw values from 230,000 g/mol. to 400,000 g/mol, preferably from 250,000 g/mol. to 400,000 g/mol, where Mw is measured as previously said.

2. The low density polyethylene of claim 1, obtainable in a polymerization process carried out in the presence of oxygen as the only radical initiating agent and in the absence of solvents.

3. The low density polyethylene of claim 1, which is an ethylene homopolymer or an ethylene copolymer, or a mixture thereof.

4. The low density polyethylene of claim 1, having a gpcBR value equal to or higher than 1.5.

5. The low density polyethylene of claim 1, having at least one of the following additional features:

   - a melt flow rate (MFR) according to ISO 1133 (190°C, 2.16 kg) from 1.5 to 15 g/10 min.;
   - elongational hardening values at 150°C at an elongational rate of 5 s$^{-1}$ equal to or higher than 4.5, in particular from 4.5 to 8.

6. Manufactured articles comprising the low density polyethylene of claim 1.

7. The manufactured articles of claim 6, in form of extrusion coated articles comprising the low density polyethylene of claim 1 in at least one coating layer, or foamed articles.

**Patentansprüche**

1. Polyethylen mit niedriger Dichte, das die folgenden Merkmale aufweist:

   1) eine Dichte von 0,910 bis 0,924 g/cm$^3$, bestimmt gemäß ISO 1183 bei 23 °C;
   2) eine Dehnverfestigung bei 150 °C mit einer Dehnungsrate von 1 s$^{-1}$ gleich oder höher als 4,2, vorzugsweise gleich oder höher als 4,5;
   3) ein Verhältnis von Mw/Mn gleich oder größer als 18, wobei Mw das Gewichtsmittel des Molekulargewichts ist, das durch den MALLS-Detektor gekoppelt an das GPC gemessen wird, und Mn das Zahlenmittel des Molekulargewichts ist, das mittels GPC (Gelpermeationschromatographie) gemessen wird;
   4) Werte für Mw von 230.000 g/mol bis 400.000 g/mol, vorzugsweise 250.000 g/mol bis 400.000 g/mol, wobei Mw wie zuvor angegeben gemessen wird.

2. Polyethylen mit niedriger Dichte nach Anspruch 1, das in einem Polymerisationsprozess erhältlich ist, der in Gegenwart von Sauerstoff als einzigem Radikalinitiatormittel und in Abwesenheit von Lösungsmitteln durchgeführt wird.

3. Polyethylen mit niedriger Dichte nach Anspruch 1, das ein Ethylenhomopolymer oder ein Ethylencopolymer oder eine Mischung davon ist.

4. Polyethylen mit niedriger Dichte nach Anspruch 1 mit einem gpcBR Wert gleich oder größer als 1,5.

5. Polyethylen mit niedriger Dichte nach Anspruch 1 mit mindestens einem der folgenden zusätzlichen Merkmale:

- einer Schmelzflussrate (MFR) gemäß ISO 1133 (190 °C, 2,16 kg) von 1,5 bis 15 g/10 min;

2) Werten der Dehnungshärtung bei 150 °C mit einer Dehnungsrate von 5 s⁻¹ gleich oder höher als 4,5, insbesondere 4,5 bis 8.

6. Fertigungsartikel, umfassend das Polyethylen mit niedriger Dichte gemäß Anspruch 1.

7. Fertigungsartikel nach Anspruch 6 in Form von extrusionsbeschichteten Artikeln, die das Polyethylen mit niedriger Dichte nach Anspruch 1 in mindestens einer Beschichtungsschicht umfassen, oder geschäumten Artikeln.

**Revendications**

1. Polyéthylène basse densité ayant les caractéristiques suivantes :

   1) une masse volumique allant de 0,910 à 0,924 g/cm$^3$, déterminée selon la norme ISO 1183 à 23 °C ;
   2) durcissement élongationnel à 150 °C à une vitesse d'allongement de 1 s$^{-1}$ égale ou supérieure à 4,2, de préférence égal ou supérieur à 4,5 ;
   3) un rapport Mw/Mn égal ou supérieur à 18, où Mw est la masse molaire moyenne en poids, mesurée par le détecteur MALLS couplé au CPG et Mn est la masse molaire moyenne en nombre, mesurée par CPG (chromatographie par Perméation de Gel) ;
   4) des valeurs Mw allant de 230.000 g/mol à 400.000 g/mol, de préférence allant de 250.000 g/mol à 400.000 g/mol, où Mw est mesuré comme précédemment mentionné.

2. Polyéthylène basse densité selon la revendication 1, pouvant être obtenu dans un procédé de polymérisation réalisé en présence d'oxygène en tant que seul agent initiateur de radicaux et en l'absence de solvants.

3. Polyéthylène basse densité selon la revendication 1, qui est un homopolymère d'éthylène ou un copolymère d'éthylène, ou un mélange de ceux-ci.

4. Polyéthylène basse densité selon la revendication 1, ayant une valeur gpcBR égale ou supérieure à 1,5.

5. Polyéthylène basse densité selon la revendication 1, ayant au moins l'une des caractéristiques supplémentaires suivantes :

- un indice de fluidité à chaud (MFR) selon la norme ISO 1133 (190 °C, 2,16 kg) allant de 1,5 à 15 g/10 min. ;
- des valeurs de durcissement élongationnel à 150 °C à une vitesse d'allongement de 5 s$^{-1}$ égale ou supérieure à 4,5, en particulier de 4,5 à 8.

6. Articles fabriqués comprenant le polyéthylène basse densité selon la revendication 1.

7. Articles fabriqués selon la revendication 6, sous la forme d'articles revêtus par extrusion comprenant le polyéthylène basse densité selon la revendication 1 dans au moins une couche de revêtement, ou articles en mousse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3691145 A
- US 20100076160 A

**Non-patent literature cited in the description**

- **C. ENOS ; K. RUFENER ; J. MERRICK-MACK ; W. YAU.** *Waters International GPC Symposium Proceedings,* 06 June 2003
- **MACKOSKO C.W.** Rheology Principles, Measurements and Applications. Wiley-VCH, 1994
- **BENOIT H. ; REMPP P. ; GRUBISIC Z.** *J. Polymer Sci., Phys. Ed.,* 1967, vol. 5, 753